# EUROPÄISCHE PATENTANMELDUNG

(11) **EP 3 847 899 A1**
(43) Veröffentlichungstag der Anmeldung: **14.07.2021**
(21) Anmeldenummer: 21151293.4
(22) Anmeldetag: 13.01.2021
(51) Int. Cl.: A23J 3/22, A23L 11/00, A23L 19/00, A23L 19/10, A23L 33/105, A23L 13/00

(54) **FISCHFLEISCHERSATZPRODUKT UND VERFAHREN ZU DESSEN HERSTELLUNG**

(30) Priorität: 13.01.2020 EP 20151408
(71) Anmelder: FRoSTA Aktiengesellschaft, 27572 Bremerhaven (DE)
(72) Erfinder: Albers, Daniel, 26954 Nordenham (DE)
(74) Vertreter: Raffay & Fleck

(57) **Zusammenfassung**

Die Erfindung betrifft ein Lebensmittelprodukt und dessen Herstellung.

Im Stand der Technik sind zahlreiche Fleisch- und Fischfleischersatzprodukte bekannt. Üblicherweise wird zur Erzielung einer fasrigen Struktur pflanzliche Proteintexturat eingesetzt.

Aufgabe der Erfindung ist es, eine Lebensmittelprodukt mit einer Struktur ähnlich zu Fleisch oder Fischfleisch anzugeben.

Die Aufgabe wird gelöst durch ein Lebensmittelteil, insbesondere Fischfleischersatz, hergestellt aus und/oder beinhaltend:
• Jackfrucht,
• Hypokotylknolle und/oder Wurzel eines Eurosiden II, insbesondere Campanuliden, insbesondere Schwarzwurzel, Petersilienwurzel, und/oder weiße Rübe.
Dadurch kann insbesondere eine dem Fischfleisch ähnliche Struktur oder Textur und/oder ein dem Fisch ähnliches Mundgefühl geschaffen werden.

## Beschreibung

Die Erfindung betrifft ein Lebensmittelprodukt und dessen Herstellung.

Im Stand der Technik sind zahlreiche Fleisch- und Fischfleischersatzprodukte bekannt. Üblicherweise wird zur Erzielung einer fasrigen Struktur pflanzliche Proteintexturat, insbesondere von Soja, Erbse oder Weizen, eingesetzt.

Aufgabe der Erfindung ist es, eine Lebensmittelprodukt mit einer Struktur ähnlich zu Fleisch oder Fischfleisch anzugeben, dass aber kein solches enthält, insbesondere vegetarisch oder vegan ist, insbesondere ohne Einsatz von Proteintexturat. Die Aufgabe wird gelöst durch ein Lebensmittelteil, insbesondere Fischfleischersatz, hergestellt aus und/oder beinhaltend:
- Jackfrucht,
- Hypokotylknolle und/oder Wurzel eines Eurosiden II, insbesondere Campanuliden, insbesondere Schwarzwurzel, Petersilienwurzel, und/oder weiße Rübe,
sowie bevorzugt auch Zutaten einer Füllmasse, insbesondere:
- Gemüsekohl, insbesondere Blumenkohl und/oder
- Gartenbohne, insbesondere deren Samen, insbesondere Borlotti Bohne und/oder eine weiße Bohne.

Dadurch kann insbesondere eine dem Fischfleisch oder Geflügelfleisch ähnliche Struktur oder Textur und/oder ein dem Fisch oder Geflügelfleisch ähnliches Mundgefühl geschaffen werden. Das Besondere und der signifikante Unterschied zu anderen Produkten auf dem Mark, ist der Einsatz von Hypokotylknolle und/oder Wurzel eines Eurosiden II, um die lammellenartige Textur zu erreichen. Für die leicht faserige Textur wird die Jackfrucht verwendet. Die weiteren Zutaten dienen insbesondere als Füllmasse oder Streckmittel.

Insbesondere beinhaltet das Lebensmittelteil 8 bis 25 Gew% Jackfrucht, 40 - 80 Gew% Hypokotylknolle und/oder Wurzel eines Eurosiden II, 4 bis 20 Gew% Gemüsekohl, 2 bis 15 Gew% Gartenbohne.

Bevorzugt beinhaltet es 13 bis 20 Gew% Jackfrucht, 55 - 65 Gew% Hypokotylknolle und/oder Wurzel eines Eurosiden II, 8 bis 15 Gew% Gemüsekohl, 4 bis 9 Gew% Gartenbohne.

Weiter vorteilhaft beinhaltet es neben weiteren Zutaten oder ausschließlich zusätzlich
- Proteinkonzentrat, insbesondere nicht zur Schaffung einer, insbesondere fischfleischähnliche, Struktur und/oder ausschließlich zur Erhöhung des Proteinanteils, insbesondere bis maximal 8 Gew%, insbesondere maximal 6 Gew% und/oder
- Öl, insbesondere Leinöl, insbesondere mindestens 0,5 und/oder maximal 3 Gew%, und/oder
- Verdickungsmittel, insbesondere Metyhlcellulose, insbesondere mindestens 0,5 und/oder maximal 3 Gew%, und/oder
- Salz, insbesondere Meersalz, insbesondere mindestens 0,5 und/oder maximal 3 Gew%.

Insbesondere beinhaltet das Lebensmittelteil kein Proteintexturat.

Vorteilhafterweise sind Gemüsekohl und Gartenbohne als Mus beinhaltet und/oder Schwarzwurzel als Stückchen mit Kantenlängen im Bereich von 0,2 - 0,8 mm, insbesondere 0,3 - 0,5 mm, beinhaltet. Dabei ist spezifizierte die Kantenlänge insbesondere bei mindestens einer Kante des betrachteten Stücks oder bei mindestens einer Kante eines gedachten das Stück gerade umschließenden Quaders gegeben. Bevorzugt ist die spezifizierte Kantenlänge bei mindestens zwei und/oder drei Kanten in unterschiedlichen Richtungen, also beispielsweise Breite und Länge eines gedachten das Stück gerade umschließenden Quaders gegen. Es schadet aber nicht, wenn auch kleinere Bruchstücke beinhaltet sind. Insbesondere erfüllen mindestens 80Gew% der jeweiligen Zutat die Anforderung an die Kantenlänge.

Mit besonderem Vorteil ist das Lebensmittelteil roh und/oder nicht gekocht. Dies verbessert die Textur. Zur Verbesserung der Haltbarkeit kann es aber auch gekocht werden/sein.

Bevorzugt ist das Lebensmittelteil mit einer Panade umgeben, wobei insbesondere 50 - 80 Gew%, insbesondere 60 - 70 Gew%, Lebensmittelteil und/oder 20 bis 50 Gew%, insbesondere 30 bis 40 Gew%, Panade beinhaltet in dem so entstandenen Lebensmittel vorhanden sind.

Mit besonderem Vorteil ist das Lebensmittelteil oder Lebensmittel ein Fischstäbchen ist, eine Frikadelle oder eine panierte Portionen, insbesondere in Form einer Tafel, eines Trapez oder eines Rechtecks, ist.

Bevorzugt ist das Lebensmittel oder Lebensmittelteil vorgebraten und/oder tiefgefroren ist.

Gelöst wird die Aufgabe auch durch ein Verfahren zur Herstellung eines Lebensmittelteils, insbesondere Fischfleischersatzes, wobei
- Jackfrucht,
- Hypokotylknolle und/oder Wurzel eines Eurosiden II, insbesondere Campanuliden, insbesondere Schwarzwurzel, Petersilienwurzel, und/oder weiße Rübe,
sowie bevorzugt auch Zutaten einer Füllmasse, insbesondere:
- Gemüsekohl, insbesondere Blumenkohl und/oder
- Gartenbohne, insbesondere deren Samen, insbesondere Borlotti Bohne und/oder eine weiße Bohne
vermengt, insbesondere für eine Dauer von 5 bis 20 Minuten, und/oder insbesondere bei 20 bis 60 Umdrehungen pro Minute, und/oder mit 200 bis 1000 Umdrehungen eines Rührers und/oder insbesondere in einem Kutter.

Bevorzugt wird dabei zerkleinerte Jackfrucht, zerkleinerte Hypokotylknolle und/oder Wurzel eines Eurosiden II gemischt, insbesondere zusammen mit Gemüsekohl als Mus und/oder Gartenbohne als Mus.

Mit Vorteil wird Mus aus Gemüsekohl und Gartenbohne, entweder gemeinsam oder einzeln hergestellt.

Insbesondere wird eine Füllmasse, insbesondere ein Mus, insbesondere als homogene Füllmasse, insbesondere aus Gemüsekohl und Gartenbohne, hergestellt. Dies erfolgt bevorzugt in einem Kutter, in dem die Zutaten der Füllmasse, insbesondere Gemüsekohl und Gartenbohne, zu einer homogenen Masse verarbeitet werden. Diese Masse ähnelt insbesondere zerkleinerten Fischfleisch in Farbe und Optik. Insbesondere werden die Zutaten so gewählt und/oder bearbeitet, dass dies erreicht wird.

Bevorzugt wird das Mus oder die Füllmasse, insbesondere aus Gemüsekohl und/oder Gartenbohne, entweder ausschließlich oder mit weiteren Zutaten, mit Jackfrucht und Hypokotylknolle und/oder Wurzel eines Eurosiden II gemischt.

Mit Vorteil wird die Jackfrucht in Streifen und/oder Stücken mit 0,5 - 1,5 cm Kantenlänge und/oder die Hypokotylknolle und/oder Wurzel in Streifen und/oder Stücken, insbesondere mit Kantenlängen im Bereich von 0,2 mm bis 8 cm, insbesondere 0,3 mm bis 3 cm, insbesondere 1 bis 2 cm, insbesondere bis 1,5 cm, insbesondere 0,3 - 0,5 mm, vermengt, insbesondere mit dem Mus oder der Füllmasse. Dabei wird insbesondere erst danach Verdickungsmittel zugegeben.

Dabei ist spezifizierte die Kantenlänge insbesondere bei mindestens einer Kante , bevorzugt mindestens zwei Kanten, insbesondere allen drei Kanten des betrachteten Stücks oder bei mindestens einer Kante, bevorzugt mindestens zwei Kanten, insbesondere allen drei Kanten eines gedachten das Stück gerade umschließenden Quaders gegeben. Bevorzugt ist die spezifizierte Kantenlänge bezüglich Jackfrucht bei maximal zwei Kanten in unterschiedlichen Richtungen, also beispielsweise Breite und Länge gegeben und die Kantenlänge in die dritte Richtung größer, denn es handelt sich bevorzugt um Streifen, insbesondere mit einer Länge im Bereich von 3 bis 5 cm, insbesondere bei einer Breite und/oder einer Länge jeweils im Bereich 0,8 bis 1,5 cm, bevorzugt 1 bis 1,3 cm, um die Fasern der Jackfrucht zumindest teilweise als solche im Lebensmittelteil zu erhalten.

Es schadet aber nicht, wenn auch kleinere Bruchstücke beinhaltet sind. Insbesondere erfüllen mindestens 80 Gew% der jeweiligen Zutat die Anforderung an die Kantenlänge.

Mit Vorteil wird Jackfrucht verwendet, die vor dem Vermengen zerkleinert, blanchiert und tiefgefrorene wurde. Insbesondere wird die Jackfrucht nach dem Ernten zerkleinert, dann blanchiert und eingefroren und/oder insbesondere gefroren, insbesondere tiefgefroren, geschnitten und zum Vermengen zugegeben.

Bevorzugt werden für die Herstellung des Lebensmittelteils 8 bis 25 Gew% Jackfrucht, 40 - 80 Gew% Hypokotylknolle und/oder Wurzel eines Eurosiden II, 4 bis 20 Gew% Gemüsekohl, 2 bis 15 Gew% Gartenbohne verwendet.

Mit Vorteil wird Proteinkonzentrat zugegeben, insbesondere aber nicht zur Schaffung einer, insbesondere Fischfleichähnliche, Struktur und/oder ausschließlich zur Erhöhung des Proteinanteils, insbesondere bis maximal 8 Gew%, insbesondere maximal 6 Gew%, des Lebensmittelteils (also noch ohne Panade betrachtet).

Mit Vorteil wird auch Öl, insbesondere Leinöl, insbesondere mindestens 0,5 und/oder maximal 3 Gew% des Lebensmittelteils (also noch ohne Panade betrachtet), mit vermengt.

Bevorzugt wird vor oder bei dem letzten Vermengen und/oder vor einem Erhitze Verdickungsmittel, insbesondere Metyhlcellulose, insbesondere mindestens 0,5 und/oder maximal 3 Gew% des Lebensmittelteils (also noch ohne Panade betrachtet), zugegeben.

Insbesondere wird auch Salz, insbesondere Meersalz, insbesondere mindestens 0,5 und/oder maximal 3 Gew% des Lebensmittelteils (also noch ohne Panade betrachtet), mit vermengt.

Mit Vorteil wird das Lebensmittelteil nach dem Vermengen portioniert und/oder paniert und anschließend vorgebraten und gefrostet. Insbesondere wird 50 - 80 Gew% Lebensmittelteil und 20 bis 50 Gew% Panade zusammengefügt, wobei hier die Gew-Prozentangaben auf das entstehende Lebensmittel (also Lebensmittelteil und Panade) bezogen sind.
Bevorzugt werden außer den genannten Zutaten keine weiteren Zutaten verwendet.

Mit Vorteil wird mit dem Verfahren ein Fischstäbchen, eine Frikadelle, eine panierte Portionen, insbesondere in Form einer Tafel, eines Trapez, eines Rechteck, hergestellt. Insbesondere wird nach dem Vermengen eine Portionierung und Formgebung vorgenommen und anschließend paniert, vorgebraten und tiefgefroren. Die Formgebung erfolgt insbesondere mittels einer Formmaschine und/oder durch Pressen in eine negative Form.

Schwarzwurzel ist aufgrund seiner sensorischen Eigenschaften, wie eine weiße Farbe und einer festen aber gleichzeitig nachgebenden Struktur,
besonders gut geeignet um Fischfleisch ähnliche Eigenschaften zu imitieren. Insbesondere um die feinen Fasern in der Textur des Fischfleischs nachzubilden, wird Jackfruit verwendet. Diese ist durch ihre faserige Struktur, hervorragend dafür geeignet.
Insbesondere entsteht so nach dem Vermengen, insbesondere nach dem Vorbraten und/oder Braten ein gleichartiges und dem Fisch ähnliches Mundgefühl, hinsichtlich der Textur und Konsistenz.

## Patentansprüche

1. Lebensmittelteil, insbesondere Fischfleischersatz, hergestellt aus und/oder beinhaltend:
• 5 bis 50 Gew% Jackfrucht,
• Hypokotylknolle und/oder Wurzel eines Eurosiden II, insbesondere Campanuliden, insbesondere Schwarzwurzel, Petersilienwurzel, und/oder weiße Rübe,
wobei Hypokotylknolle als Stückchen mit Kantenlängen im Bereich von 0,2 mm - 8 cm beinhaltet ist.

2. Lebensmittelteil nach Anspruch 1, wobei zudem Gemüsekohl, insbesondere Blumenkohl, und Gartenbohne, insbesondere deren Samen, insbesondere Borlotti Bohne und/oder eine weiße Bohne, beinhaltet sind und/oder wobei 8 bis 25 Gew% Jackfrucht, und/oder 40 - 80 Gew%, insbesondere 20 bis 80 Gew%, Hypokotylknolle und/oder Wurzel eines Eurosiden II und/oder 4 bis 20 Gew% Gemüsekohl und/oder 2 bis 15 Gew% Gartenbohne im Lebensmittel beinhaltet sind.

3. Lebensmittelteil nach einem der vorstehenden Ansprüche, wobei Proteinkonzentrat beinhaltet ist, insbesondere nicht zur Schaffung einer, insbesondere fischfleischähnliche, Struktur und/oder ausschließlich zur Erhöhung des Proteinanteils, insbesondere bis maximal 8 Gew%, insbesondere maximal 6 Gew% und/oder wobei Öl, insbesondere Leinöl, insbesondere mindestens 0,5 und/oder maximal 3 Gew%, beinhaltet ist und/oder wobei Verdickungsmittel, insbesondere Metyhlcellulose, insbesondere mindestens 0,5 und/oder maximal 3 Gew%, beinhaltet ist und/oder wobei Salz, insbesondere Meersalz, insbesondere mindestens 0,5 und/oder maximal 3 Gew%, beinhaltet ist.

4. Lebensmittelteil nach einem der vorstehenden Ansprüche, wobei Gemüsekohl und Gartenbohne als Mus beinhaltet und/oder Schwarzwurzel als Stückchen mit Kantenlängen im Bereich von 0,2 mm bis 3 cm, insbesondere 1 bis 2 cm, und/oder Jackfrucht in Streifen, beinhaltet sind.

5. Lebensmittelteil nach einem der vorstehenden Ansprüche, wobei das Lebensmittelteil gekocht ist.

6. Lebensmittel aufweisend mindestens ein Lebensmittelteil nach einem der vorstehenden Ansprüche, wobei das mindestens ein Lebensmittelteil mit einer Panade umgeben ist, wobei insbesondere 50 - 80 Gew% Lebensmittelteil und 20 bis 50 Gew% Panade beinhaltet sind.

7. Lebensmittel nach vorstehendem Anspruch, wobei das Lebensmittel ein Fischstäbchen ist, eine Frikadelle oder eine panierte Portionen, insbesondere in Form einer Tafel, eines Trapez oder eines Rechtecks, ist.

8. Lebensmittel oder Lebensmittelteil nach einem der vorstehenden Ansprüche, wobei das Lebensmittel oder Lebensmittelteil vorgebraten und/oder tiefgefroren ist.

9. Verfahren zur Herstellung eines Lebensmittelteils, insbesondere Fischfleischersatzes, wobei
• 5 bis 50 Gew% Jackfrucht,
• Hypokotylknolle und/oder Wurzel eines Eurosiden II, insbesondere Campanuliden, insbesondere Schwarzwurzel, Petersilienwurzel, und/oder weiße Rübe
vermengt und, insbesondere anschließend, gekocht werden, wobei Hypokotylknolle als Stückchen mit Kantenlängen im Bereich von 0,2 mm - 8 cm vermengt wird.

10. Verfahren nach Anspruch 9, wobei auch Gemüsekohl, insbesondere Blumenkohl, und Gartenbohne, insbesondere deren Samen, insbesondere Borlotti Bohne und/oder eine weiße Bohne, mit vermengt werden und/oder wobei Gemüsekohl als Mus und Gartenbohne als Mus und zerkleinerte Jackfrucht, zerkleinerte Hypokotylknolle und/oder Wurzel eines Eurosiden II gemischt werden, insbesondere im Kutter und/oder für 2 bis 10 min und/oder bei 10 bis 30 Umdrehungen pro Minute und/oder 30 bis 150 Umdrehungen eines Rührers.

11. Verfahren nach Anspruch 9 oder 10, wobei die Jackfrucht in Streifen, insbesondere mit einer Länge im Bereich von 2 bis 8 cm, insbesondere 3 bis 5 cm und/oder mit Breite und/oder Dicke im Bereich von 0,5mm - 15 mm, insbesondere 1 bis 1,3 cm und/oder Stücken mit 0,5 - 1 mm Kantenlänge und/oder die Hypokotylknolle und/oder Wurzel in Streifen und/oder Stücken mit Kantenlänge im Bereich von 0,2 mm bis 3 cm, insbesondere 1 bis 2 cm, vermengt werden.

12. Verfahren nach einem der Anspruch 9 bis 11, wobei das Lebensmittelteil nach Vermengen und Portionieren paniert und anschließend vorgebraten und gefrostet wird.

13. Verfahren nach einem der Anspruch 9 bis 12, wobei die Jackfrucht vor dem Vermengen in zerkleinert, blanchiert und tiefgefrorene wird

14. Verfahren nach einem der Anspruch 9 bis 13, wobei ein Lebensmittel hergestellt wird und das Lebensmittel ein Fischstäbchen, eine Frikadelle, eine panierte Portionen, insbesondere in Form einer Tafel, eines Trapez, eines Rechtecks ist.

15. Verfahren nach einem der Anspruch 9 bis 14, wobei 8 bis 25 Gew% Jackfrucht, 40 - 80 Gew% Hypokotylknolle und/oder Wurzel eines Eurosiden II, 4 bis 20 Gew% Gemüsekohl, 2 bis 15 Gew% Gartenbohne im vermengt werden und/oder wobei Proteinkonzentrat mit vermengt wird, insbesondere nicht zur Schaffung einer, insbesondere Fischfleichähnliche, Struktur und/oder ausschließlich zur Erhöhung des Proteinanteils, insbesondere bis maximal 8 Gew%, insbesondere maximal 6 Gew% und/oder
wobei Öl, insbesondere Leinöl, insbesondere mindestens 0,5 und/oder maximal 3 Gew%, mit vermengt wird und/oder wobei Verdickungsmittel, insbesondere Metyhlcellulose, insbesondere mindestens 0,5 und/oder maximal 3 Gew%, mit vermengt wird und/oder
wobei Salz, insbesondere Meersalz, insbesondere mindestens 0,5 und/oder maximal 3 Gew%, mit vermengt wird und/oder wobei 50 - 80 Gew% Lebensmittelteil und 20 bis 50 Gew% Panade zusammengefügt werden.
